# EUROPEAN PATENT APPLICATION

(11) **EP 3 696 742 A1**
(43) Date of publication of application: **19.08.2020**
(21) Application number: 20157824.2
(22) Date of filing: 18.02.2020
(51) Int. Cl.: G06Q 10/00

(54) **PARAMETER SETTING SUPPORT DEVICE, PARAMETER SETTING SUPPORT METHOD, AND PROGRAM**

(30) Priority: 18.02.2019 JP 2019026863
(71) Applicant: Hitachi, Ltd., Tokyo 100-8280 (JP)
(72) Inventor: Akishita, Yosuke, Tokyo, 100-8280 (JP); Suzuki, Yasufumi, Tokyo, 100-8280 (JP); Wakabayashi, Noboru, Tokyo, 100-8280 (JP); Kawakami, Masumi, Tokyo, 100-8280 (JP); Oshima, Kosuke, Tokyo, 100-8280 (JP)
(74) Representative: Manitz Finsterwald Patent- und Rechtsanwaltspartnerschaft mbB

(57) **Abstract**

The parameter setting support device 20 includes a parameter analysis unit 201 configured to analyze a parameter based on a requirement specification, a parameter generation unit 202 configured to generate a parameter set used in a test based on the analyzed parameter and an environment change impact composed of a group of the parameter whose setting value may be changed depending on a result obtained by the test and the requirement specification affected by a change of the setting value, an environment input unit 207 configured to receive an input of a change value for the parameter set, a requirement specification extraction unit 203 configured to extract the requirement specification affected by the change based on the change value and the environment change impact, a parameter set extraction unit 204 configured to extract a parameter set to be adjusted based on the extracted requirement specification, and an optimal parameter set selection unit 206 configured to select an optimal parameter set based on a test result and the requirement specification.

## Description

### BACKGROUND OF THE INVENTION

### 1. Field of the Invention

The present invention relates to a parameter setting support device, a parameter setting support method, and a program.

### 2. Description of the Related Art

In general, when designing a build-to-order product, a designer needs to determine values of many product parameters in order to keep a requirement specification as an essential condition. In recent years, a method for selecting one of Pareto solutions from optimization results is used focusing on a trade-off between the many product parameters. The Pareto solution is a set of "solutions that cannot be given superiority or inferiority", and is a solution of a case where values of another objective function deteriorate when an attempt is made to improve a certain objective function.

JP-A-2017-146888 (Patent Literature 1) discloses a design support device including a customer requirement specification input unit configured to receive a customer requirement specification, a simulation unit configured to generate a plurality of analysis results relating to a product, a design plan candidate generation unit configured to extract an analysis result satisfying the customer requirement specification to generate a design plan candidate, a customer satisfaction degree input unit configured to input customer satisfaction degree, a product parameter importance estimation unit configured to estimate importance of product parameters based on the customer satisfaction degree, an optimal design plan search unit configured to search for an optimal design plan, and an optimal design plan determination unit configured to determine the optimal design plan from a plurality of Pareto solutions.

However, in the development of control software, the parameter set at the time of design may not meet the requirement specification. In the development of the control software, a plurality of test phases such as a test using a simulator, a test in which some components of a device are combined, and a test using the entire device are often performed.

Since there may be a deviation from planned values of the components or the device to be combined as the test phase progresses, it may be necessary to adjust the parameter as the test phase progresses.

In the development of the general control software including the technique disclosed in Patent Literature 1, since parameter adjustment is rarely considered as the test phase progresses, for example, when the test proceeds to a final phase, a setting value different from a parameter of a previous test phase may be set in order to satisfy the requirement specification. Therefore, in order to confirm that the software operates without any problem, a rework in which the test is performed again from the previous test phase may occur.

### SUMMARY OF THE INVENTION

The present invention has been made in view of the above problems, and provides a parameter setting support device, a parameter setting support method, and a program capable of avoiding rework of the test as much as possible.

In order to solve the above problem, a parameter setting support device according to one aspect of the present invention includes a parameter storage unit in which a parameter set including a plurality of parameters and a requirement specification in a setting value of the parameter set are stored, a requirement specification input unit configured to receive an input of a requirement specification of control software, a parameter analysis unit configured to analyze the parameter stored in the parameter storage unit based on the requirement specification that receives the input, an environment change impact storage unit in which an environment change impact composed of a group of the parameter whose setting value is changeable depending on a result obtained by a test and the requirement specification affected by a change of the setting value of the parameter is stored, a parameter generation unit configured to generate a plurality of parameter sets used in the test based on the parameter analyzed by the parameter analysis unit and the environment change impact stored in the environment change impact storage unit, an environment input unit configured to receive an input of a change value for the plurality of parameter sets, a requirement specification extraction unit configured to extract the requirement specification affected by the change based on the change value that receives the input and the environment change impact, a parameter set extraction unit configured to extract a plurality of parameter sets to be adjusted from the parameter storage unit based on the requirement specification extracted by the requirement specification extraction unit, a test result input unit configured to receive an input of a test result obtained by the test using the parameter set extracted by the parameter set extraction unit, and an optimal parameter set selection unit configured to select an optimal parameter set based on the test result that receives the input and the requirement specification received by the requirement specification input unit.

According to the present invention, a parameter setting support device, a parameter setting support method, and a program capable of avoiding rework of a test as much as possible are implemented.

### BRIEF DESCRIPTION OF THE DRAWINGS

FIG. 1 is a schematic configuration diagram illustrating a parameter setting support device according to an embodiment.
FIG. 2 is a flowchart of a parameter setting support method according to the embodiment.
FIG. 3 is a configuration diagram illustrating a requirement specification storage unit according to the embodiment.
FIG. 4 is a schematic configuration diagram illustrating a parameter analysis unit according to the embodiment.
FIG. 5 is a diagram illustrating a parameter storage unit according to the embodiment.
FIG. 6 is a diagram illustrating an analysis result storage unit according to the embodiment.
FIG. 7 is a diagram illustrating an environment change impact storage unit according to the embodiment.
FIG. 8 is a schematic configuration diagram illustrating a parameter generation unit according to the embodiment.
FIG. 9 is a diagram illustrating a parameter candidate storage unit according to the embodiment.
FIG. 10 is a diagram illustrating an environment storage unit according to the embodiment.
FIG. 11 is a schematic configuration diagram illustrating a parameter set extraction unit according to the embodiment.
FIG. 12 is a schematic configuration diagram illustrating an optimal parameter set selection unit according to the embodiment.

### DESCRIPTION OF THE PREFERRED EMBODIMENTS

Hereinafter, an embodiment of the present invention will be described with reference to the drawings. It should be noted that the embodiment to be described later does not limit the invention according to the claims, and all of the elements and combinations thereof described in the embodiment are not necessarily essential to the solution to the problem.

The parameter setting support device which is the embodiment of the present invention is applied to a device that supports setting of parameters of railway inverter software. Of course, an application range of the parameter setting support device of the present invention is not limited to the embodiment and an embodiment to be described later.

### [Embodiment 1]

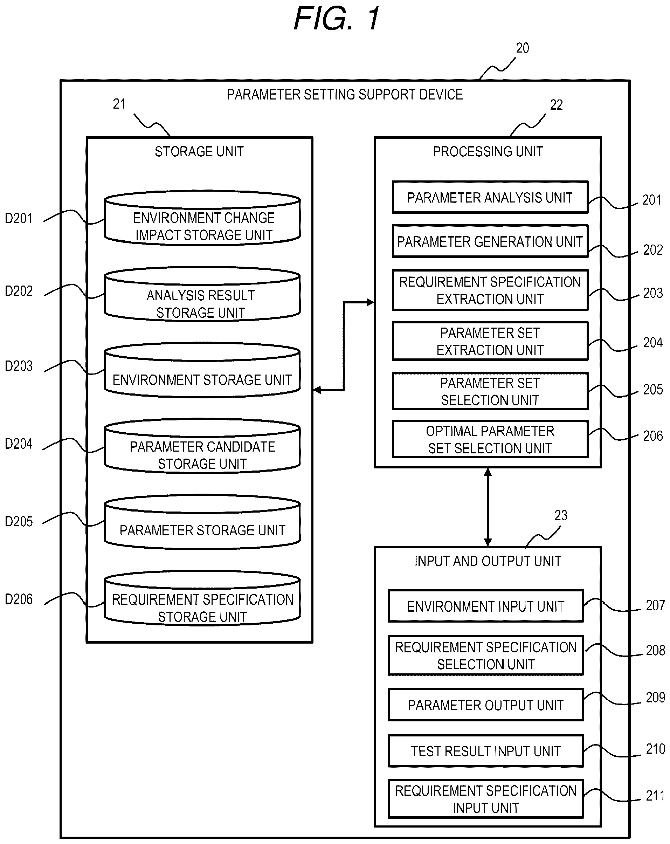

FIG. 1 is a configuration diagram illustrating a parameter setting support device 20 according to the embodiment.

The parameter setting support device 20 includes a storage unit 21, a processing unit 22, and an input and output unit 23. The parameter setting support device 20 is preferably composed of a device capable of various information processing. As an example, the parameter setting support device 20 is composed of an information processing device such as a computer.

The storage unit 21 stores data or programs. The storage unit 21 includes, for example, a magnetic storage medium such as a hard disk drive (HDD), and a semiconductor storage medium such as a random access memory (RAM), a read only memory (ROM), and a solid state drive (SSD) . A combination of an optical disk such as a digital versatile disk (DVD) and an optical disk drive is also used as the storage unit 21. In addition, a known storage medium such as a magnetic tape medium is also used as the storage unit 21.

The storage unit 21 includes an environment change impact storage unit D201, an analysis result storage unit D202, an environment storage unit D203, a parameter candidate storage unit D204, a parameter storage unit D205, and a requirement specification storage unit D206.

The processing unit 22 executes the programs stored in the storage unit 21. The processing unit 22 includes, for example, arithmetic elements such as a central processing unit (CPU) and a field-programmable gate array (FPGA) capable of processing various information. For example, the processing unit 22 performs processing such as storing data obtained from the input and output unit 23 in the storage unit 21, processing the data stored in the storage unit 21 and storing a result in the storage unit 21, and outputting the data stored in the storage unit 21 to the input and output unit 23.

A program (not shown) such as firmware is stored in the storage unit 21. When a power source of the parameter setting support device 20 is turned on, the processing unit 22 reads and executes the firmware and the like stored in the storage unit 21, performs operation control of the entire parameter setting support device 20, and performs functions shown in each functional unit to be described later.

The processing unit 22 includes a parameter analysis unit 201, a parameter generation unit 202, a requirement specification extraction unit 203, a parameter set extraction unit 204, a parameter set selection unit 205, and an optimal parameter set selection unit 206. The input and output unit 23 includes an environment input unit 207, a requirement specification selection unit 208, a parameter output unit 209, a test result input unit 210, and a requirement specification input unit 211.

The input and output unit 23 receives input and output from a user of the parameter setting support device 20. The input and output unit 23 includes a combination of an input device such as a keyboard and a mouse and an output device including a display screen such as a liquid crystal display. Alternatively, the input and output unit 23 includes a device capable of inputting and outputting by a single device such as a so-called smartphone or a tablet device.

For example, the input and output unit 23 receives an input of information necessary for the creation or change of the data recorded in the storage unit 21, and outputs completion of the creation or change and a countermeasure recommendation result to the display screen. The input and output processing performed by the input and output unit 23 may be performed by an input and output unit provided in another device.

The input and output unit 23 includes the environment input unit 207, the requirement specification selection unit 208, the parameter output unit 209, the test result input unit 210, and the requirement specification input unit 211.

The detailed configuration and operation of each function implementing unit in the storage unit 21, the processing unit 22, and the input and output unit 23 will be described in detail later.

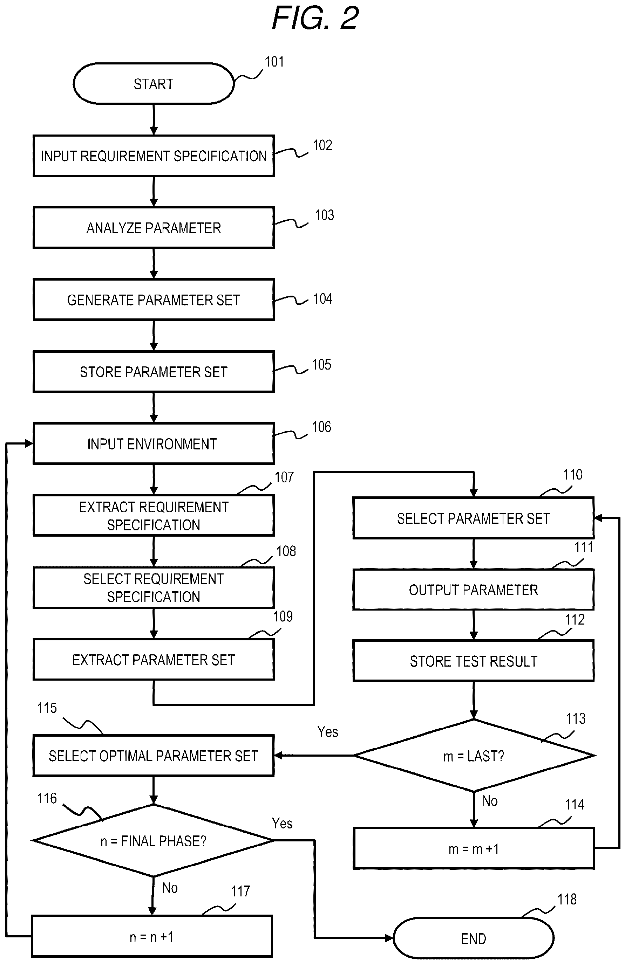

Next, a series of processing procedures performed by the parameter setting support device 20 of the present embodiment will be described with reference to FIG. 2.

FIG. 2 is a flowchart of a parameter setting support method performed by the parameter setting support device 20 according to the present embodiment.

First, the input and output unit 23 inputs a requirement specification for control software by the requirement specification input unit 211, and stores the requirement specification into the requirement specification storage unit D206 (step 102).

The requirement specification input unit 211 receives an input of the requirement specification of the control software.

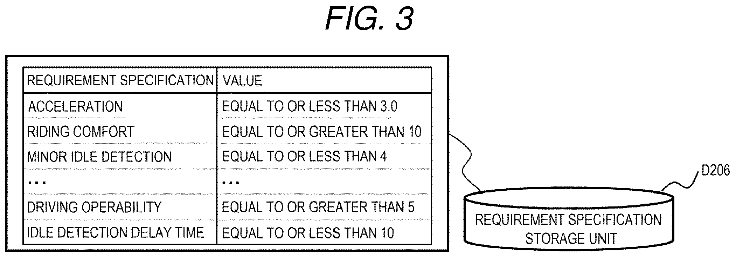

FIG. 3 is a configuration diagram illustrating the requirement specification storage unit D206 according to the present embodiment. As shown in FIG. 3, the requirement specification has two elements, that is, a name of the requirement specification and a range of the requirement specification. For example, when there is a requirement specification in which vehicle acceleration is desired to be equal to or less than 3.0 [km/h/s], the name of the requirement specification is "acceleration", and the range of the requirement specification is "equal to or less than 3.0". The requirement specification input unit 211 stores the input requirement specification into the requirement specification storage unit D206.

The range of the requirement specification shown in FIG. 3 is only one of an upper limit and a lower limit, whereas the range may be a range composed of a combination of the upper limit and the lower limit.

Referring back to FIG. 2, the parameter analysis unit 201 reads the parameter set and the requirement specification in the setting value of the parameter set from the parameter storage unit D205, analyzes a requirement specification that may be changed as a test of the control software progresses, and analyzes a parameter that can be effectively adjusted in order to satisfy the requirement specification. Further, the parameter analysis unit 201 stores an obtained analysis result into the analysis result storage unit D202 (step 103).

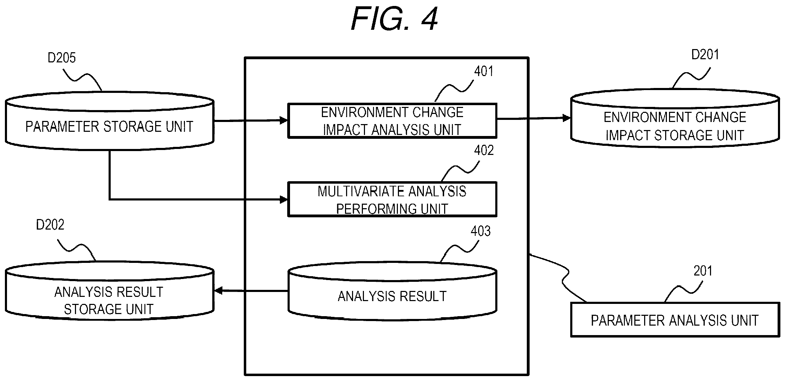

FIG. 4 is a schematic configuration diagram illustrating the parameter analysis unit 201 according to the present embodiment.

The parameter analysis unit 201 includes an environment change impact analysis unit 401 and a multivariate analysis performing unit 402.

The environment change impact analysis unit 401 reads a past parameter set and the requirement specification in the setting value of the parameter set stored in the parameter storage unit D205. Further, the environment change impact analysis unit 401 selects, from the read parameter set and the requirement specification, all sets of a parameter that may be changed during a test phase and a requirement specification affected by changing the setting values of the parameter, and stores all of the sets into the environment change impact storage unit D201 as the environment change impact.

The multivariate analysis performing unit 402 reads a parameter set of each past case and the requirement specification in the setting value of the parameter set stored in the parameter storage unit D205. Next, the multivariate analysis performing unit 402 performs a multiple regression analysis relating to the read parameter set and the requirement specification, derives a standard regression coefficient relating to each requirement specification, and analyzes a parameter most relevant to each requirement specification. In addition, the multivariate analysis performing unit 402 generates an analysis result 403 and stores the analysis result 403 into the analysis result storage unit D202.

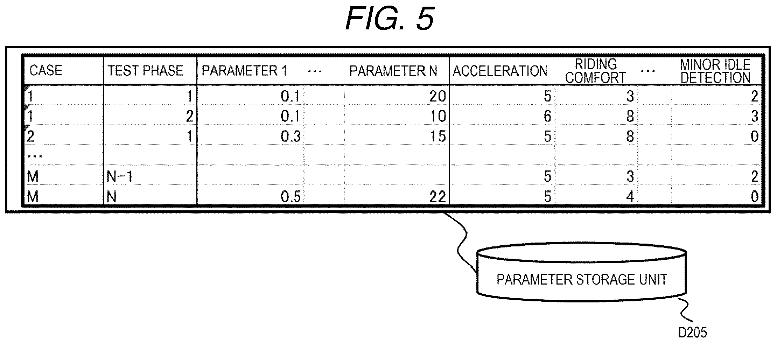

FIG. 5 is a diagram illustrating the parameter storage unit D205 according to the present embodiment.

The parameter storage unit D205 includes the parameter set for each case set in the past, the requirement specification in the setting value of each parameter set (for example, acceleration, riding comfort, or the like), and a test phase number.

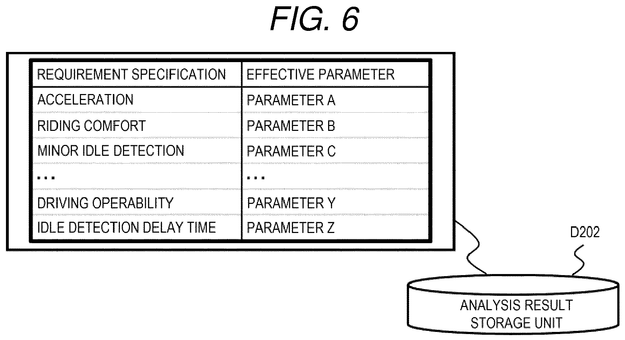

FIG. 6 is a diagram illustrating the analysis result storage unit D202 according to the present embodiment. The analysis result storage unit D202 includes the analysis result, and each analysis result includes the requirement specification (for example, acceleration, riding comfort, or the like) and the parameter that can be effectively adjusted for the requirement specification.

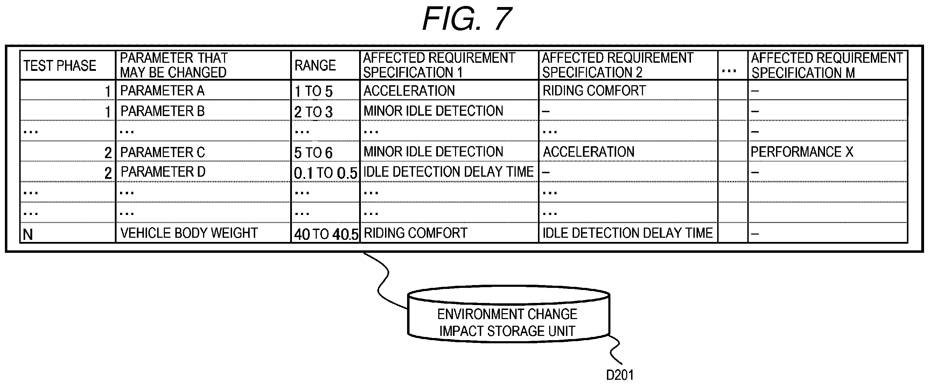

FIG. 7 is a diagram illustrating the environment change impact storage unit D201 according to the embodiment.

The environment change impact storage unit D201 includes, as the environment change impact, the parameter (for example, vehicle body weight) that may be changed during each test phase, a change range of the parameter (for example, the vehicle body weight is 40 to 40.5 [t]), and a name of the requirement specification affected by the change (for example, riding comfort, idle detection delay time, or the like).

The parameter that may be changed during each test phase includes a change of a parameter relating to hardware to be controlled, a change of a parameter relating to a specification change of a component to be used, and a parameter change accompanying the change in the requirement specification, and hereinafter, the change relating to the hardware parameter will be described as an example.

In this way, since the parameter analysis unit 201 of the parameter setting support device 20 of the present embodiment analyzes the parameter that may be changed during the test phase and the requirement specification affected by the parameter, when there is a change in the test phase, the parameter analysis unit 201 can select a requirement specification to be improved by parameter adjustment. In addition, since the parameter analysis unit 201 analyzes the parameter that can be effectively adjusted for the requirement specification, when the environment changes, the parameter analysis unit 201 can adjust the most effective parameter for each requirement specification so as to satisfy the requirement specification.

The parameter storage unit D205 of the embodiment stores the parameter handled in the software of the railway inverter to be controlled. However, considering that the parameter storage unit D205 stores the parameter of other devices into the vehicle, even when the requirement specification cannot be satisfied only by parameter setting in one control software, the parameter setting satisfying the requirement specification is possible.

Referring back to FIG. 2, the parameter generation unit 202 reads the setting value of the parameter of the past parameter set from the parameter storage unit D205, and generates a candidate of the parameter setting value from the setting value of the parameter. Next, the parameter generation unit 202 generates an orthogonal table using the parameter to be adjusted according to the environment change as an adjustment element based on the environment change impact stored in the environment change impact storage unit D201 and the analysis result stored in the analysis result storage unit D202 (step 104).

Next, the parameter generation unit 202 stores the orthogonal table generated in step 104 into the parameter candidate storage unit D204 (step 105).

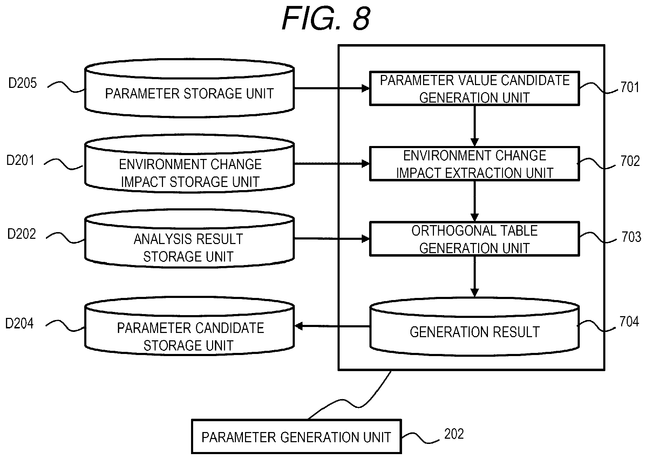

FIG. 8 is a schematic configuration diagram illustrating the parameter generation unit 202 according to the present embodiment. The parameter generation unit 202 includes a parameter value candidate generation unit 701, an environment change impact extraction unit 702, and an orthogonal table generation unit 703.

The parameter value candidate generation unit 701 generates a histogram of each parameter based on the setting values of the parameters of the past parameter set stored in the parameter storage unit D205, and sets the candidate of the setting value of the parameter in a descending order of frequency. There are many known and well-known methods for determining a range of the histogram, such as a Sturges formula, and please refer to the respective textbooks.

The environment change impact extraction unit 702 reads the hardware parameter that may be changed and the affected requirement specification, both of which are the environment change impacts stored in the environment change impact storage unit D201.

The orthogonal table generation unit 703 extracts the parameter to be adjusted for each test phase and generates the orthogonal table based on the affected requirement specification read by the environment change impact extraction unit 702 and the analysis result read from the analysis result storage unit D202. That is, the orthogonal table generation unit 703 generates the orthogonal table in order from a combination of the parameters to be adjusted in a final test phase, and performs a processing for adding the orthogonal table to be adjusted in a post test phase to each row in one column in the orthogonal table generated by a combination of the parameters to be adjusted in a previous test phase. Therefore, the orthogonal table generation unit 703 generates an N (number of test phases) -dimensional orthogonal table as a generation result 704, and copies each parameter set of the orthogonal table for all test phases, and stores the parameter set into the parameter candidate storage unit D204.

It is also possible to store all parameter sets in the parameter candidate storage unit D204 and perform a subsequent parameter set selection operation without generating the orthogonal table by the orthogonal table generation unit 703, but the parameter set selection operation can be controlled to a reasonable scale by generating the orthogonal table by the orthogonal table generation unit 703 and reducing the orthogonal table to an actual number of the parameter set.

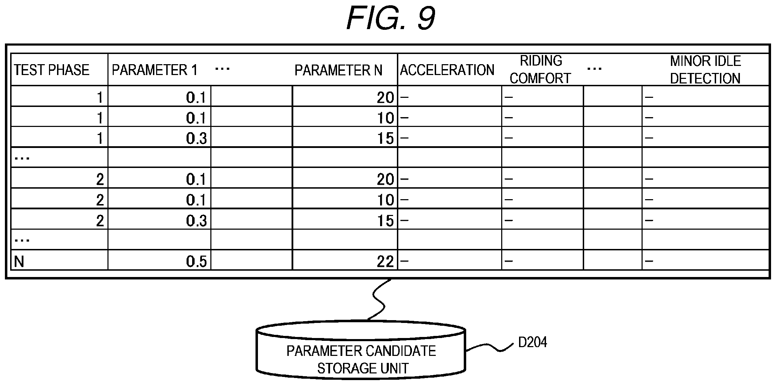

FIG. 9 is a diagram illustrating the parameter candidate storage unit D204 according to the present embodiment.

The parameter candidate storage unit D204 includes the candidate of the setting value of the parameter set in each test phase and the requirement specification (no value at the time of parameter candidate generation) that is the test result of the candidate of the setting value of the parameter set.

In this way, since the parameter generation unit 202 of the parameter setting support device 20 of the present embodiment generates a plurality of parameter sets that can adjust the parameter in each test phase, when the parameter that needs to be adjusted in the post test phase is tested in the previous test phase, and the environment changes and the parameter adjustment is required, it is possible to eliminate rework to the previous test phase by selecting the parameter from the parameters tested in the previous test phase.

Referring back to FIG. 2, the environment input unit 207 receives an input of a change value for the plurality of parameter sets (step 106). More specifically, the environment input unit 207 receives an input of a hardware environment of each test phase, and stores the received hardware environment into the environment storage unit D203.

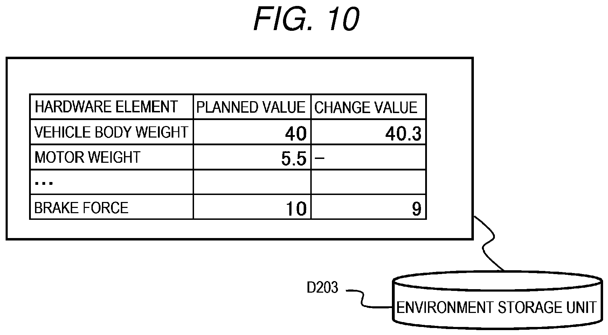

FIG. 10 is a diagram illustrating the environment storage unit D203 according to the present embodiment. The environment storage unit D203 includes a name of a hardware element (for example, the vehicle body weight), a planned value of the hardware element (for example, the vehicle body weight is 40 [t]), and the change value (for example, the vehicle body weight is changed to 40.3 [t]).

Referring back to FIG. 2, the requirement specification extraction unit 203 extracts the requirement specification affected by a change in the hardware environment based on the parameters stored in the environment storage unit D203 and the environment change impact storage unit D201 (step 107). In the extraction of the requirement specification, the hardware element having the change value among the hardware element stored in the environment storage unit D203 is used to search for the parameter that may be changed and is stored in the environment change impact storage unit D201 and to extract the affected requirement specification for the change.

Next, the requirement specification selection unit 208 outputs the requirement specification extracted by the requirement specification extraction unit 203 in step 107, and receives the selection input of the requirement specification to be adjusted (step 108). There may be the plurality of requirement specifications to be selected, but the most important requirement specification is input first.

Next, the parameter set extraction unit 204 extracts the candidate of the parameter set using only the parameter to be adjusted in the post test phase and the parameter to be adjusted in a current test phase as the adjustment element (step 109).

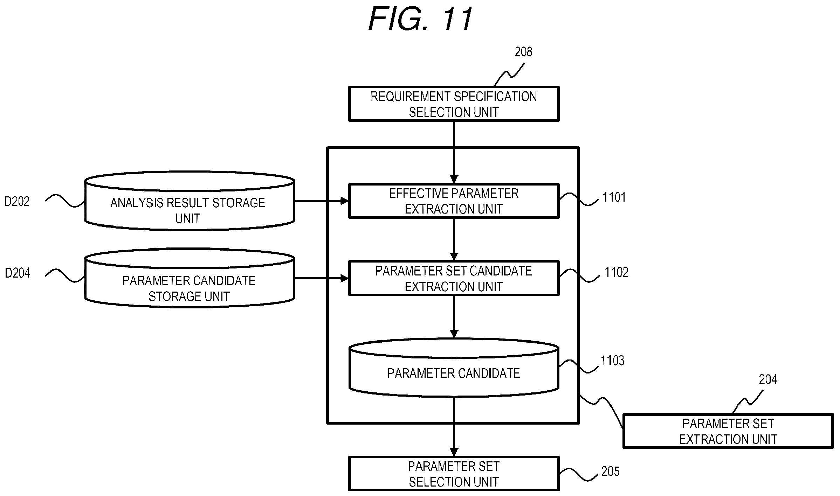

FIG. 11 is a schematic configuration diagram illustrating the parameter set extraction unit 204 according to the present embodiment. The parameter set extraction unit 204 includes an effective parameter extraction unit 1101 and a parameter set candidate extraction unit 1102.

The effective parameter extraction unit 1101 extracts a parameter corresponding to the analysis result storage unit D202 based on the requirement specification selected by the requirement specification selection unit 208.

The parameter set candidate extraction unit 1102 extracts the parameter extracted by the effective parameter extraction unit 1101 and the parameter to be adjusted in the post test phase from the parameter candidate storage unit D204, and generates a parameter candidate 1103 that is the candidate of the parameter set.

Referring back to FIG. 2, the parameter set selection unit 205 receives an individual selection input of the parameter set extracted by the parameter set extraction unit 204 in step 109 (step 110). As shown in FIG. 2, the parameter set selection unit 205 receives the selection input of the parameter set until all the test results of the parameter set extracted by the parameter set extraction unit 204 are input (steps 110 to 114).

Next, the parameter output unit 209 outputs the selected and input parameter set received by the parameter set selection unit 205 in step 110 to the software (step 111).

Next, the test result input unit 210 receives the input of the test result obtained by a test with the setting value of the parameter set output in step 111, and stores the setting value that receives the input into the requirement specification of the parameter candidate storage unit D204 (step 112).

Next, the parameter set selection unit 205 determines whether the parameter set selected in step 110 is a last parameter set (step 113), and when the parameter set selection unit 205 determines that the parameter set selected in step 110 is not the last parameter set (NO in step 113), the method proceeds to step 114. On the other hand, when the parameter set selection unit 205 determines that the parameter set selected in step 110 is the last parameter set (YES in step 113), the method proceeds to step 115.

In step 114, the parameter set selection unit 205 receives the selection input of the next parameter set, and the method returns to step 110.

In step 115, the optimal parameter set selection unit 206 stores, into the parameter storage unit D205, the parameter set obtained by the test in the parameter candidate storage unit D204, further selects an optimal parameter set, outputs the optimal parameter set to the parameter output unit 209 as the parameter of the control software, and stores the optimal parameter set into the storage unit 21.

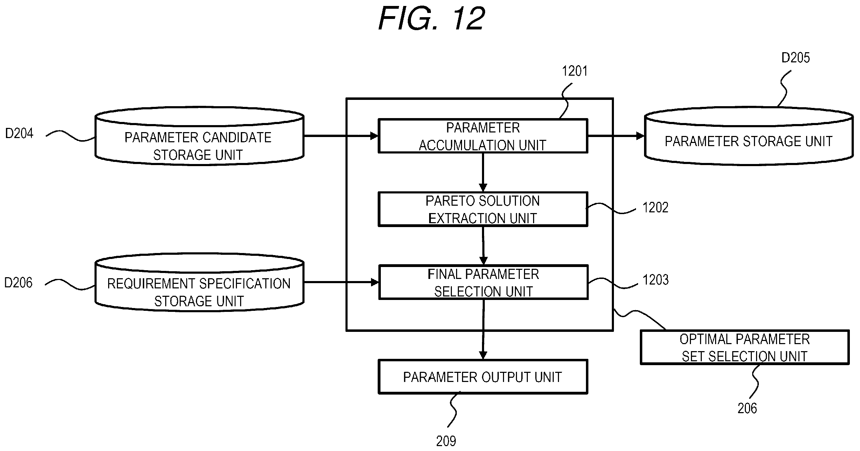

FIG. 12 is a schematic configuration diagram illustrating the optimal parameter set selection unit 206 according to the embodiment. The optimal parameter set selection unit 206 includes a parameter accumulation unit 1201, a Pareto solution extraction unit 1202, and a final parameter selection unit 1203.

The parameter accumulation unit 1201 extracts the parameter set to which the requirement specification is input (that is, the test is performed) and the requirement specification from the parameter candidate storage unit D204, and stores the parameter set and the requirement specification into the parameter storage unit D205 with a case number.

The Pareto solution extraction unit 1202 extracts a parameter set which is a Pareto solution from the requirement specification of the parameter set extracted by the parameter accumulation unit 1201. In general, an optimization problem having a plurality of objective functions in a trade-off relationship forms the Pareto solution. Even in the present embodiment, when a plurality of requirement specifications are set as an objective function with one parameter set as a solution, the objective function has a trade-off relationship (for example, acceleration and riding comfort are trade-offs). Therefore, since the parameter set is considered to form the Pareto solution, the Pareto solution is extracted. There are many known and well-known methods for extracting the Pareto solution, such as Non-dominant sort, and please refer to the respective textbooks.

The final parameter selection unit 1203 selects one parameter set which is the final parameter of the control software based on the parameter set extracted by the Pareto solution extraction unit 1202 and the requirement specification stored in the requirement specification storage unit D206. The selection of the solution from the Pareto solution performed by the final parameter selection unit 1203 is performed by selecting a best Pareto solution with the most important requirement specification selected by the requirement specification selection unit 208 from Pareto solutions that satisfy the requirement specification of the requirement specification storage unit D206.

The final parameter selection unit 1203 of the embodiment selects the Pareto solution that satisfies the requirement specification of the requirement specification storage unit D206, but by sorting the parameter sets by the number of the Pareto solutions that satisfy the requirement, when the requirement specification cannot be satisfied, the final parameter selection unit 1203 may select the parameter set that satisfies a maximum requirement specification for design reconsideration.

Referring back to FIG. 2, the optimal parameter set selection unit 206 waits for the test phase to proceed, and currently, determines whether the phase is the final test phase (step 116), when the optimal parameter set selection unit 206 determines that the phase is not the final test phase (NO in step 116), the method proceeds to step 117 to input the environment of the post test phase, and when the optimal parameter set selection unit 206 determines that the phase is the final test phase (YES in step 116), the operation shown in the flowchart of FIG. 2 is ended.

In step 117, the optimal parameter set selection unit 206 advances the test phase and the method returns to step 106 so as to input the environment of the post test phase.

According to the present embodiment configured in this way, since the parameter analysis unit 201 analyzes the parameter that may be changed during the test phase and the requirement specification affected by the parameter, when there is a change in the test phase, the parameter analysis unit 201 can select the requirement specification to be improved by parameter adjustment.

In addition, since the parameter analysis unit 201 analyzes the parameter that can be effectively adjusted for the requirement specification, when the environment changes, the parameter analysis unit 201 can adjust the most effective parameter for each requirement specification so as to satisfy the requirement specification.

Further, since the parameter generation unit 202 generates the plurality of parameter sets that can adjust the parameter in each test phase, when the parameter that needs to be adjusted in the post test phase is tested in the previous test phase, and the environment changes and the parameter adjustment is required, it is possible to eliminate the rework to the previous test phase by selecting the parameter from the parameters tested in the previous test phase.

Therefore, according to the present embodiment, the parameter set can be generated as a parameter that adjusts the parameter that can be effectively adjusted for the requirement specification and the parameter adjusted according to the phase of the test such that the parameter that can be effectively adjusted for the requirement specification and the parameter adjusted according to the phase of the test are analyzed and the test rework does not occur.

As a result, the parameter setting support device, the parameter setting support method, and the program capable of avoiding the rework of the test as much as possible are implemented.

The invention is not limited to the embodiments described above, and includes various modifications. For example, the embodiments described above are described in detail for easy understanding of the invention, and the invention is not necessarily limited to those including all the configurations described above. Further, a part of a configuration of a certain embodiment can be replaced with a configuration of the other embodiments or the configuration of the other embodiments can be added to the configuration of the certain embodiment. A part of the configuration of each embodiment may be added, deleted, or replaced with another configuration.

Further, the configurations, functions, processing units, processing means, or the like may be achieved by hardware by means of designing a part or all of them with, for example, an integrated circuit. Further, the configurations, functions, or the like may be achieved by software by means of interpreting and executing a program by a processor, for achieving the respective functions. Information such as a program that realizes each function, a table, and a file can be stored in a recording device such as a memory, a hard disk, or an SSD, or a recording medium such as an IC card, an SD card or a DVD.

In addition, a control line and an information line are shown in consideration of necessity for description, and not all control lines and information lines are necessarily shown in the device. In practice, it may be considered that almost all the configurations are connected with each other.

Features described in this specification and the claims or shown in a figure shall be deemed combinable with and amongst each other also if their combination is not expressly described, to the extent that the combination is technically feasible. Features described in a certain context, embodiment, figure or claim shall be deemed separable from this claim, context, embodiment or figure and shall be deemed combinable with every other figure, claim, context or embodiment, to the extent that it is technically feasible. Embodiments and figures shall not be understood as being meant necessarily exclusive against each other. Descriptions of a method or procedure or a method step or a procedural step shall be understood also as description of means and/or possibly program instructions of executable code on a data carrier adapted for implementing the method or procedure or method step or procedural step, and vice versa.

## Claims

1. A parameter setting support device comprising:
a parameter storage unit in which a parameter set including a plurality of parameters and a requirement specification in a setting value of the parameter set are stored;
a requirement specification input unit configured to receive an input of the requirement specification of control software;
a parameter analysis unit configured to analyze the parameter stored in the parameter storage unit based on the requirement specification that receives the input;
an environment change impact storage unit in which an environment change impact composed of a group of the parameter whose setting value is changeable depending on a result obtained by a test and the requirement specification affected by a change of the setting value of the parameter is stored;
a parameter generation unit configured to generate a plurality of the parameter sets used in the test based on the parameter analyzed by the parameter analysis unit and the environment change impact stored in the environment change impact storage unit;
an environment input unit configured to receive an input of a change value for the plurality of parameter sets;
a requirement specification extraction unit configured to extract the requirement specification affected by the change based on the change value that receives the input and the environment change impact;
a parameter set extraction unit configured to extract a plurality of the parameter sets to be adjusted from the parameter storage unit based on the requirement specification extracted by the requirement specification extraction unit;
a test result input unit configured to receive an input of a test result obtained by the test using the parameter set extracted by the parameter set extraction unit; and
an optimal parameter set selection unit configured to select an optimal parameter set based on the test result that receives the input and the requirement specification received by the requirement specification input unit.

2. The parameter setting support device according to claim 1, wherein the parameter analysis unit derives a standard partial regression coefficient for the requirement specification by a multivariate analysis.

3. The parameter setting support device according to claim 1, wherein the parameter generation unit generates an orthogonal table with the parameter to be adjusted and the parameter other than the parameter to be adjusted, generates an orthogonal table adding an orthogonal table of a combination of the parameters to be adjusted to each row of a column of an orthogonal table of a combination other than the parameter to be adjusted, and sets the parameter set of the generated orthogonal table as the plurality of parameter sets used in the test.

4. The parameter setting support device according to claim 3, wherein the optimal parameter set selection unit extracts a plurality of the parameter sets that are Pareto solutions from the requirement specification of the parameter set generated by the parameter generation unit, and selects the optimum parameter set from the plurality of parameter sets that are Pareto solutions.

5. The parameter setting support device according to claim 1, wherein the predetermined setting value of the parameter and the requirement specification for the predetermined setting value of the parameter are stored in the parameter storage unit.

6. The parameter setting support device according to claim 1, wherein the parameter analysis unit calculates the environment change impact based on the predetermined setting value of the parameter and the requirement specification for the predetermined setting value of the parameter stored in the parameter storage unit, and stores the environment change impact into the environment change impact storage unit.

7. The parameter setting support device according to claim 1, wherein the parameter generation unit generates a histogram of the parameter based on the setting value of the parameter set stored in the parameter storage unit, and sets a candidate of the setting value of the parameter set based on the histogram.

8. A parameter setting support method performed by a parameter setting support device,
the parameter setting support device including:
a parameter storage unit in which a parameter set including a plurality of parameters and a requirement specification in a setting value of the parameter set are stored; and
an environment change impact storage unit in which an environment change impact composed of a group of the parameter whose value is changeable depending on a result obtained by a test and the requirement specification affected by a change of the value of the parameter is stored,
the parameter setting support method comprising:
a requirement specification input step of receiving an input of a requirement specification of control software;
a parameter analysis step of analyzing the parameter stored in the parameter storage unit based on the requirement specification that receives the input;
a parameter generation step of generating a plurality of the parameter sets used in a test based on the parameter analyzed in the parameter analysis step and the environment change impact stored in the environment change impact storage unit;
an environment input step of receiving an input of a change value for the plurality of parameter sets;
a requirement specification extraction step of extracting the requirement specification affected by the change based on the change value that receives the input and the environment change impact;
a parameter set extraction step of extracting a plurality of the parameter sets to be adjusted from the parameter storage unit for the requirement specification extracted in the requirement specification extraction step;
a test result input step of receiving an input of a test result obtained by the test using the parameter set extracted in the parameter set extraction step; and
an optimal parameter set selection step of selecting an optimal parameter set based on the test result that receives the input and the requirement specification received in the requirement specification input step.

9. A computer program causing a computer to execute,
the computer including:
a parameter storage unit in which a parameter set including a plurality of parameters and a requirement specification in a setting value of the parameter set are stored; and
an environment change impact storage unit in which an environment change impact composed of a group of the parameter whose value is changeable depending on a result obtained by a test and the requirement specification affected by a change of the value of the parameter is stored,
the computer program implementing:
a requirement specification input function of receiving an input of a requirement specification of control software;
a parameter analysis function of analyzing the parameter stored in the parameter storage unit based on the requirement specification that receives the input;
a parameter generation function of generating a plurality of the parameter sets used in the test based on the parameter analyzed with the parameter analysis function and the environment change impact stored in the environment change impact storage unit;
an environment input function of receiving an input of a change value for the plurality of parameter sets;
a requirement specification extraction function of extracting the requirement specification affected by the change based on the change value that receives the input and the environment change impact;
a parameter set extraction function of extracting a plurality of the parameter sets to be adjusted from the parameter storage unit for the requirement specification extracted with the requirement specification extraction function;
a test result input function of receiving an input of a test result obtained by the test using the parameter set extracted with the parameter set extraction function; and
an optimal parameter set selection function of selecting an optimal parameter set based on the test result that receives the input and the requirement specification received with the requirement specification input function.
